# EUROPEAN PATENT SPECIFICATION

(11) **EP 1 216 872 B1**
(45) Date of publication and mention of the grant of the patent: **01.09.2004**
(21) Application number: 01130587.7
(22) Date of filing: 21.12.2001
(51) Int. Cl.: B60K 11/04, B60K 11/08

(54) **Motor vehicle provided with a structure for encasing of a heat- exchanger unit in the engine compartment**
Kraftfahrzeug mit einer Anordnung zum Kapseln einer Wärmetauschereinheit im Motorraum
Véhicule automobile équipé d'une structure pour encaisser une unité d'échange de chaleur dans le compartiment moteur

(30) Priority: 22.12.2000 IT TO001203
(43) Date of publication of application: 26.06.2002
(73) Proprietor: FIAT AUTO S.p.A., 10135 Torino (IT)
(72) Inventor: Hamnett, Rudyard, 10024 Moncalieri (IT)
(74) Representative: Bongiovanni, Simone

(56) References cited:
- EP-A- 0 236 216
- WO-A-82/00808
- DE-A- 4 307 793
- DE-C- 19 630 899
- GB-A- 2 117 721
- US-A- 5 409 288
- US-A- 5 476 138
- US-A- 5 573 299
- US-A- 5 915 490
- PATENT ABSTRACTS OF JAPAN vol. 1995, no. 09, 31 October 1995 (1995-10-31) & JP 07 158442 A (TOYOTA MOTOR CORP), 20 June 1995 (1995-06-20)

## Description

The present invention relates to a motor vehicle which is provided with a structure for encasing of a heat-exchanger unit in the front engine compartment of the motor vehicle itself.

As is known, the front engine compartment of motor vehicles is delimited at the front by a bumper, it is closed by a bonnet, and accommodates a heat-exchanger unit, which comprises one or more radiators, and is disposed in a position facing and adjacent to the bumper, in order to be lapped in use by external cooling air obtained via apertures which are provided in the bumper itself, and/or in a front portion of the bonnet.

In order to improve the efficiency of the exchange of heat, it is known to encase, i.e. to enclose the heat exchanger unit in a structure which defines a duct, in order, in use, to guide an external flow of cooling air through the heat-exchanger unit, thus reducing the formation of swirling motion and dispersion of the flow itself.

The encasing structures of a known type comprise a plurality of walls which are separate from one another and from the other components of the motor vehicle, and are assembled by positioning each wall around the unit, then by securing the wall itself to corresponding support elements. The walls are connected to one another and to the bodywork by means of retention elements, which are of the moulded type, and are shaped according to the geometry, dimensions and arrangement of the components in the motor vehicle itself.

The above-described known encasing structures are unsatisfactory, in that they require lengthy times and high costs for production and assembly.

The foregoing is owing substantially to the fact that the known encasing structures comprise a relatively high number of separate walls, such that it is highly problematic not only to produce the walls themselves and the corresponding connection and support devices, but above all to fit these elements one after another in the corresponding motor vehicles. For the same reasons, the stores management costs are also relatively high, in particular when it is necessary to provide different encasing structures, and thus walls which have dimensions and geometries which differ according to the various types of motor vehicles.

In addition, the assembly is often difficult to carry out in an optimum manner, in particular owing to the very limited spaces which are present between the bumper and the heat-exchanger unit, with the result that minor positioning errors may arise.

WO8200808A discloses a front-end structure of a vehicle according to the preamble of claim 1, comprising a frame, which is integral with a front grille and supports a cooling unit.

The object of the present invention is to produce a motor vehicle which is provided with a structure for encasing of a heat-exchanger unit in the engine compartment, which makes it possible to solve the above-described problems simply and economically.

According to the present invention, a motor vehicle is provided, comprising a front engine compartment, a bumper which delimits the said engine compartment at the front, a body which closes the said engine compartment at least partially, a heat-exchanger unit which is accommodated in the engine compartment itself, and an encasing structure for the said unit, in order, in use, to guide an external flow of air through the unit itself; said encasing structure comprising at least one wall, which is supported by one from amongst the said closure body and the said bumper; characterised in that the said encasing structure comprises two sides each comprising at least one first lateral wall, which is produced integrally with the said bumper.

The invention will now be described with reference to the attached drawings, which illustrate a nonlimiting embodiment of it, in which:
figure 1 is a longitudinal cross-section, with parts removed for the sake of clarity, of a preferred embodiment of the motor vehicle, provided with a structure for encasing of a heat-exchanger unit in the engine compartment, and produced according to the present invention;
figure 2 is a perspective view from the rear, with parts removed for the sake of clarity, of the motor vehicle in figure 1;
figure 3 is a figure similar to figure 2, and illustrates a first variant of the structure of the motor vehicle in figure 1;
figure 4 is a figure similar to figure 1, and illustrates a second variant of the structure of the motor vehicle in figure 1, with parts removed for the sake of clarity;
figure 5 is a perspective view of a detail of figure 4;
figure 6 is a figure similar to figure 1, and, with parts removed for the sake of clarity, illustrates a third variant of the structure of the motor vehicle in figure 1;
figure 7 illustrates in plan view a detail of figure 6;
figure 8 is a cross-section according to the line VIII-VIII in figure 7; and
figure 9 is a cross-section according to the line IX-IX in figure 2.

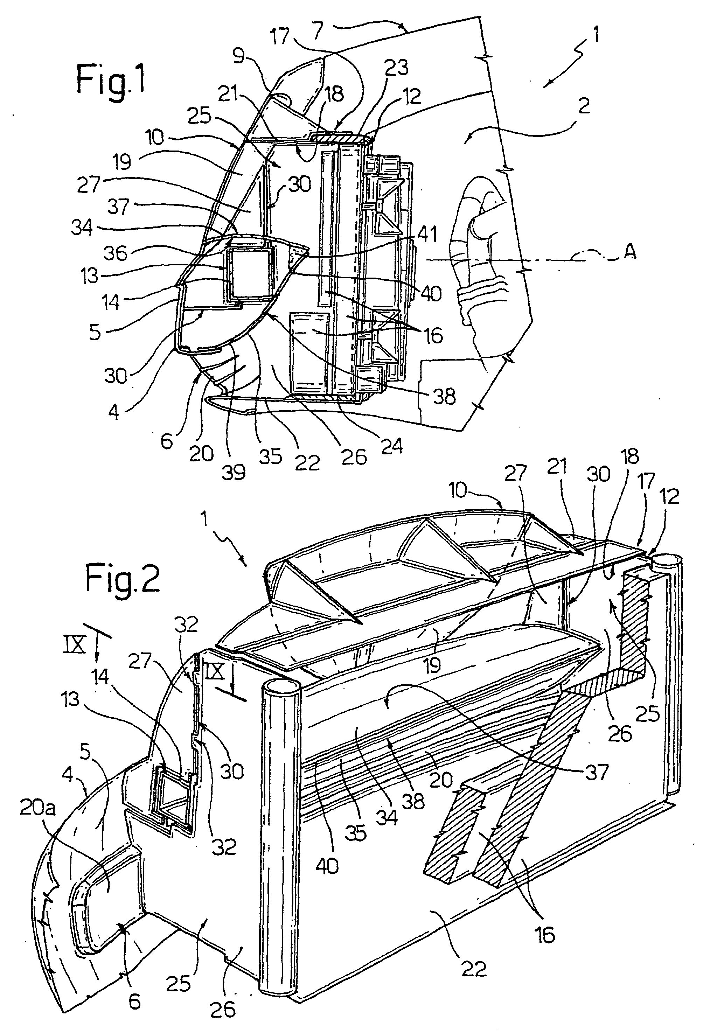

In figure 1, 1 indicates as a whole a motor vehicle comprising a front engine compartment 2 (partially illustrated), delimited by a front bumper 4, which comprises a full upper portion 5, and a lower portion 6 which is partly open, for passage of external air.

The engine compartment 2 is closed by a bonnet 7 (partially illustrated in figure 1), which is hinged at a rear end (not illustrated), and comprises a front portion 9, which slopes towards the bumper 4, and is adjacent to the bumper 4 itself when the bonnet 7 is closed. The portion 9 supports a grid or screen 10 (illustrated schematically in the attached figures), which is integral with the bonnet 7, and through which, in use, external air passes.

With reference to figures 1 and 2, the engine compartment 2 accommodates a heat-exchanger unit 12 (illustrated schematically and partially), which faces the bumper 4 and the portion 9, and a box-type cross member 13, which has a substantially rectangular transverse cross-section, and comprises an intermediate section 14, which is interposed between the portion 5 and the unit 12.

In particular, the unit 12 comprises three radiators 16, which are disposed at right-angles to a longitudinal direction A of the motor vehicle 1.

The unit 12 is encased by a structure 17, which is interposed between the unit 12 itself, the bumper 4 and the bonnet 7, and defines a duct 18 which is sealed against fluid, in order to guide through the unit 12 itself an external air flow obtained from a lower area 19 of the screen 10, and from the portion 6.

In particular, the portion 6 comprises a plurality of fins 20, which are shaped such as to guide the flow of external air in the duct 18 towards the unit 12, and two closing walls 20a (only one of which can be seen in figure 2), which are disposed on lateral parts opposite the structure 17, and are produced integrally with the bumper 4, inside the same forming mould, whereas in the known solutions the walls 20a are defined in general by stoppers applied to the bumper itself.

Again with reference to figures 1 and 2, the structure 17 comprises a flat horizontal upper wall 21 and lower wall 22, of which the wall 21 is produced integrally with the screen 10, inside the same forming mould, whereas the wall 22 is produced integrally with the bumper 4, inside the same forming mould.

The walls 21 and 22 are connected in a manner sealed against fluid, to the unit 12, by means of interposition of respective adhesive deformable rectangular pieces 23 and 24 (figure 1), which are obtained from a punched flat sheet, and are made of a soft material, and preferably of sponge rubber. The piece 23 is preferably supported, by means of a support fin, by an upper cross member (not illustrated), which also supports the headlights of the motor vehicle 1, whereas the piece 24 is supported by the wall 22, and is supplied, for assembly, together with the bumper 4.

The structure 17 additionally comprises two vertical sides 25, each of which in turn comprises two flat walls 26 and 27 which are parallel to the direction A, and are coplanar relative to one another. The walls 26 are produced integrally with the bumper 4, inside the same forming mould, extend beneath and behind the cross member 13, end at the limit of the areas of thermal exchange of the unit 12, without curved connection portions, and are connected in a manner sealed against fluid to the unit 12 itself, preferably by means of resilient sealing pieces (not illustrated), which are outside the duct 18, and are similar to the pieces 23, 24. On the other hand, the walls 27 extend in front of, and above, the cross member 13, and have a profile which is dependent on the shape and corresponding position of the bonnet 7 and of the cross member 13 itself.

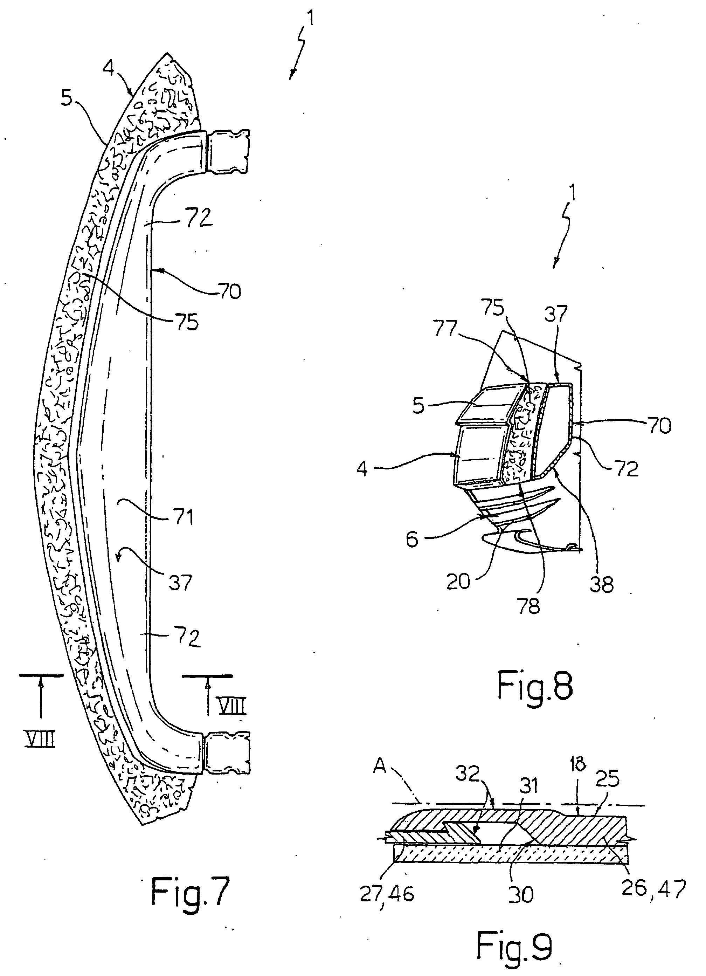

As illustrated in figures 2 and 9, the walls 26 and 27 of each side 25 delimit a slot 30 between one another, which is such as to allow the walls 27 freedom of movement, and is closed in a manner sealed against fluid by a deformable sealing piece (figure 9), which is superimposed on the walls 26,27 themselves, and is similar to the pieces 23,24. The walls 27 are snapped onto the walls 26 by means of two pairs of projections 32, which have a profile such as to limit the formation of turbulent motion in the duct 18, and to allow the walls 27 to be displaced in the direction A towards the walls 26, so as to compensate for minor frontal impacts of the motor vehicle 1.

According to a variant, not illustrated, the projections 32 extend along the entire slot 30, so that it is not necessary to provide the sealing piece 31.

With reference to figures 1 and 2, the duct 18 accommodates a shaped pair of walls 34 and 35, which extend between the opposite sides 25 of the section 14, have respective transverse sections which are constant along the section 14, and, together with the portion 5 of the bumper 4, delimit a cavity 36, which accommodates the section 14 itself.

With reference to figure 1, the wall 34 extends above the section 14 in a substantially horizontal position, from a lower end of the screen 10, towards the unit 12, and is delimited by a convex surface 37 which faces the wall 21.

On the other hand, the wall 35 is delimited by a surface 38, which faces the wall 22, and comprises two opposite end portions 39 and 40, of which the portion 39 is connected to the bumper 4, and is curved in a convex manner towards the wall 22, whereas the portion 40 is curved in a concave manner towards the unit 12, converges towards one end of the wall 34, and is connected in a manner sealed against fluid to this end, by means of interposition of an elongate element 41. The element 41 is made of soft material, and preferably of adhesive sponge rubber, and projects towards the unit 12, such as to absorb any impacts of the walls 34,35 against the unit 12 itself.

The walls 34,35 not only guide the flow of air in the duct 18, in order to avoid the formation of turbulent motion which could be caused by the cross member 13, but also have a profile which contributes towards imparting to the motor vehicle 1 relatively high dynamic efficiency, i.e. a coefficient of penetration (commonly known as "cx") which is relatively low. These effects are all the greater, the longer the distance between the bumper 4 and the unit 12.

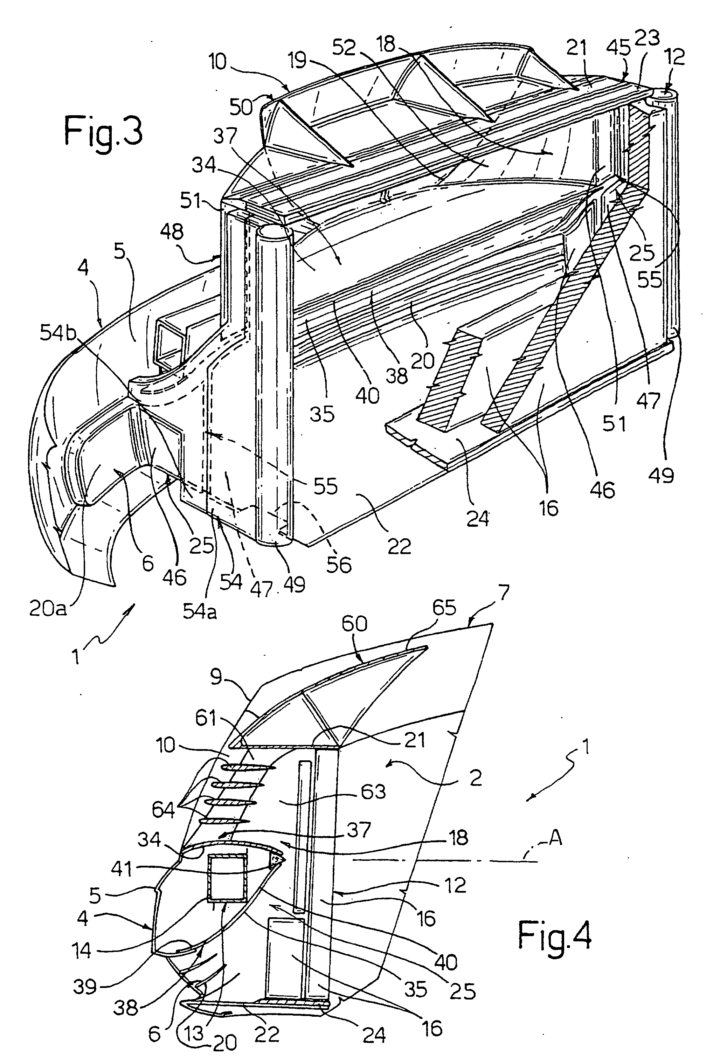

The variant illustrated in figure 3 shows a structure 45, which differs from the structure 17 substantially in the different subdivision of the sides 25. In particular, each side 25 comprises three walls 46, 47 and 48, of which the walls 46 and 47 are longitudinal, vertical, flat, and coplanar relative to one another. The walls 46 are produced integrally with the bumper 4, inside the same forming mould, the walls 47 are produced integrally with the unit 12, and in particular with the tanks 49 of the unit 12 itself, inside the same forming mould, whereas the walls 48 are produced inside the same forming mould as the screen 10 and the wall 34, in order to form a body 50 in a single piece, which is supported by the bonnet 7.

The walls 48 comprise respective flat wings 51, which are coplanar relative to the walls 46 and 47 of the same side 25 and face the unit 12, and corresponding shaped wings 52, which converge on one another, and end along the lateral edges of the screen 10, in order to connect the unit 12 to the screen 10 itself. The effect of the wings 52 in limiting the turbulent motion in the duct 18 is all the greater, the longer the distance between the screen 10 and the unit 12.

With reference to figure 3, the profile of the lateral edges of the wall 34 follows the shaped form of the wings 52.

On each side 25, the walls 46, 47, 48 and 35 delimit between one another a plurality of slots 55, which are closed by a deformable piece 54, comprising two separate bodies 54a and 54b, which are adjacent to one another head to head, are sealed against fluid between one another, and are similar to the pieces 23,24,31. The body 54a is superimposed on, and glued onto the wall 47, such as to be supplied, for assembly, together with the unit 12, whereas the body 54b is superimposed on, and glued onto the wall 46, such as to be supplied, for assembly, together with the bumper 4.

The walls 47 support integrally on their own lower ends respective fins 56, which project towards one another for support of the wall 22, and are connected to the walls 46 by means of pairs of projections 32 (which cannot be seen in figure 3). During the step of assembly of the structure 45, after the unit 12 has been fitted, the bumper 4 is brought in the direction A towards the unit 12 itself, until the walls 46 snap onto the walls 47. In use, by means of the pair of projections 32, the slots 55, and the deformability of the pieces 54, the bumper 4 can be displaced towards the unit 12, in the event of relatively minor impacts.

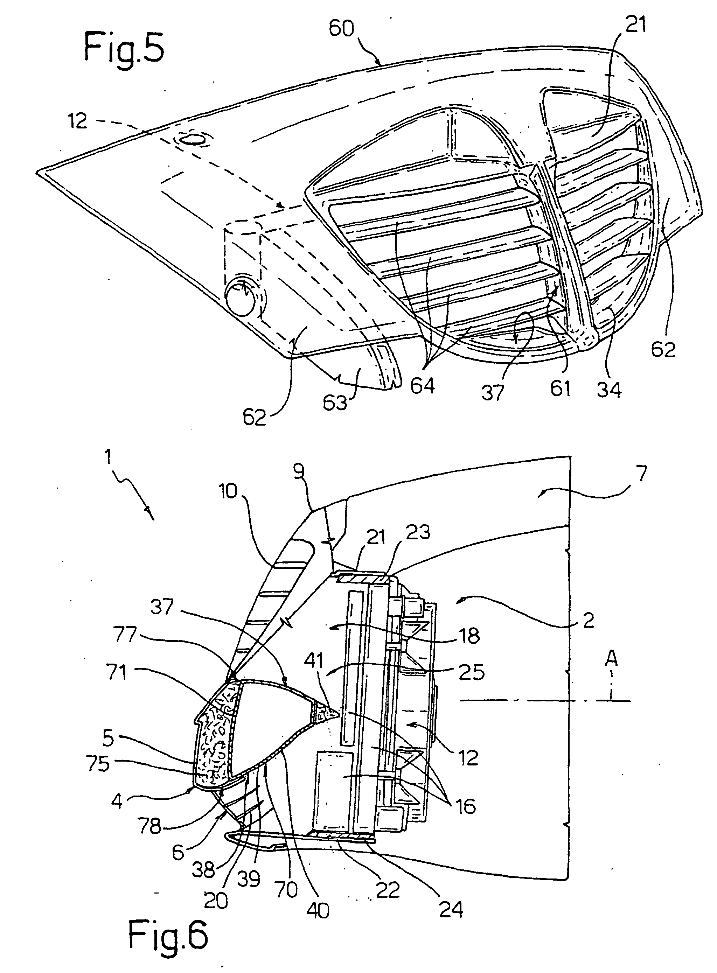

According to the variant illustrated in figures 4 and 5, the motor vehicle 1 comprises a body 60, which firstly fulfils a function of trimming the engine compartment 2, by closing the engine compartment 2 itself partially, and, secondly, constitutes part of the structure 17,45.

The body 60 is made of a single piece of plastics material which is resistant to high temperatures, and preferably of carbon, it is disposed in a fixed position above the cross member 13, and comprises a grid or screen 61 of the fin type, indicated as 64, which is interposed between the unit 12 and the portion 9 of the bonnet 7. The body 60 additionally comprises two lateral wings 62, which are connected in a manner sealed against fluid to the unit 12, by means of interposition of respective vertical lateral panels 63, which are made of soft material, and in particular are obtained from a flat sheet of punched synthetic sponge rubber. If the distance between the unit 12 and the wings 62 is relatively great, the panels 63 have a strengthening element made of plastics material (not illustrated).

Preferably, the wall 21 and the wall 34 are produced integrally with the body 60, inside the same forming mould.

According to a variant, not illustrated, the screen 61 comprises a grating instead of the fins 64.

According to the variant illustrated in figures 6 to 8, the cross member 13 and the walls 34 and 35 are replaced by a cross member 70, which is not box-shaped, but is produced in a single piece by hydroforming, and has both a structural and aerodynamic function.

In particular, the cross member 70 comprises an intermediate section 71, which is disposed in the same position as the section 14, is delimited directly by the above-described surfaces 37 and 38, and has a cross-section which is substantially constant along the length of the cross member 70. The intermediate section 71 is connected by means of two tapered portions 72 to the opposite ends of the cross member 70, which are secured to the struts of the frame of the motor vehicle 1 (figure 7).

The profile and the shape of the cross member 70 can be different from those illustrated, on the basis of the type of motor vehicle onto which the cross member 70 itself is fitted.

An elongate element 41 is optionally connected to the intermediate section 71 (figure 6), in order to absorb any impacts between the cross member 70 and the unit 12 itself.

Between the cross member 70 and the portion 5 of the bumper 4, there is interposed a block 75 of foam material, which co-operates with the bumper 4, in order to obtain better absorption of impacts at low speed, and comprises an intermediate portion, which is connected to the section 71, and is delimited in transverse cross-section (figure 6) by two opposite surfaces 77 and 78, which extend the surfaces 37 and 38 respectively, as far as the bumper 4, without discontinuity.

According to a variant not illustrated, the cross member 70 is curved.

It is apparent from the foregoing that the structure 17,45 of the motor vehicle 1 makes it possible firstly to obtain efficient heat exchange for the unit 12, since it prevents the formation of turbulent motion and dispersion of the flow of cooling air, and secondly, it has production times and costs which are reduced, compared with the known solutions.

This is owing substantially to the extreme simplicity of the structure 17,45, the walls of which are supported by components which are already normally present in the motor vehicle 1, such as the bumper 4, the unit 12 and the screens 10 and 61. In particular, on the basis of a preliminary study to evaluate the arrangement of the components in the engine compartment 2, the walls 21,22 and at least part of the walls 25 are produced integrally with these components in the same forming mould, such that, in comparison with the known solutions, there is reduction of the number of walls and of securing devices to be produced and fitted separately.

Consequently, compared with the known solutions, there is a decrease not only in the times and costs for production and management of the stores, but in particular there is a reduction in the assembly times and costs.

It is not only quick to assemble the structure 17,45, but it is extremely simple and economical to guarantee the sealing against fluid of the duct 18, by means of the pieces 23,24,31,54. In fact, these pieces do not require securing elements, and are extremely simple and fast to connect, since they are adhesive, they adapt to slots of different dimensions, and are made of material which is relatively economical and easy to obtain commercially, unlike the known punched, shaped sealing elements which are normally used. The pieces 23,24,31,54 can also be at least partially pre-fitted on the bumper 4 and/or on the unit 12, such as to make assembly of the structure 17,45 even faster.

As well as reducing the turbulent motion of the flow of air in the duct 18, the structure 17,45 provides the motor vehicle 1 with relatively high aerodynamic efficiency. In particular, the surfaces 37 and 38 enclose the section 14, in order to prevent the flow of air in the duct 18 from meeting the cross member 13, and have an aerodynamic profile such as, together with the fins 20, to guide the flow of air itself in an optimum manner.

In the case of the variants in figures 6 to 8, the profile of the block 75 extends the surfaces 37,38, and thus contributes towards improving the aerodynamic profile of the surfaces 37,38 themselves.

Use of the cross member 70 also makes it possible to reduce further the number of elements in the structure 17,45 and in the vehicle 1, and thus the corresponding assembly costs and times.

The slots 30,55 which are present in the sides 25 compensate for any minor errors of positioning and fitting of the structure 17,45, and, in use, for any displacements caused by minor frontal parking impacts.

For the variant in figures 4 and 5, the body 60 for trimming the engine compartment 2 covers part of the engine compartment 2 itself, in order to prevent people who are not sufficiently qualified from handling the complex units which are contained in the areas beneath, and, at the same time, it constitutes part of the structure 17,45, since it is connected in a manner sealed against fluid to the unit 12, by means of the panels 63.

Finally, it is apparent from the foregoing that modifications and variants which do not depart from the scope of protection of the present invention can be made to the motor vehicle 1 described.

In particular, the geometry, position and dimensions of the unit 12 and of the structure 17,45 could be different from those illustrated and described. In addition, the screen 10 could be fixed, the wall 22 could be distinct from the bumper 4, and/or the walls 34,35 could be absent, or could be at least partially produced integrally with the bumper 4, inside the same forming mould.

## Claims

1. Motor vehicle (1) comprising a front engine compartment (2), a bumper (4) which delimits the said engine compartment (2) at the front, a body (7;60) which closes the said engine compartment (2) at least partially, a heat-exchanger unit (12) which is accommodated in the engine compartment (2) itself, and an encasing structure (17;45) for the said unit (12), in order, in use, to guide an external flow of air through the unit (12) itself; said encasing structure (17;45) comprising at least one wall (21,22,26,34,36,46,48), which is supported by one from amongst the said closure body (7;60) and the said bumper (4); **characterised in that** the said encasing structure (17;45) comprises two sides (25), each comprising at least one first lateral wall (26;46), which is produced integrally with the said bumper (4).

2. Motor vehicle according to claim 1, **characterised in that** it comprises a grid (10;61) which is disposed in front of the said unit (12), in a position adjacent to the said bumper (4); the said encasing structure (17;45) comprising at least one wall (21,34,48) which is produced integrally with the said grid (10;61).

3. Motor vehicle according to claim 2, **characterised in that** the said grid (10;61) is supported by the said closure body (7;60).

4. Motor vehicle according to any one of the preceding claims, **characterised in that** the said closure body is defined by a bonnet (7).

5. Motor vehicle according to any one of claims 1 to 3, **characterised in that** the said closure body is defined by a fixed body (60) for trimming of the said engine compartment (2), which is connected in a manner sealed against fluid, to the sides of the said unit (12).

6. Motor vehicle according to any one of the preceding claims, **characterised**
**in that** each said side additionally comprises at least a second lateral wall (47), which is produced integrally with a portion (49) of the said unit (12).

7. Motor vehicle according to claim 2 and claim 6, **characterised in that** the said sides (25) comprise respective third lateral walls (48) for connection of the said unit (12) to the said grid (10).

8. Motor vehicle according to claim 6 or claim 7, **characterised in that** each said side (25) comprises means (32) for snap-on connection between the said lateral walls, which can permit relative displacement of the lateral walls themselves.

9. Motor vehicle according to any one of the preceding claims, **characterised in that** each said side (25) delimits at least one aperture (30,55); deformable means (31,54) being superimposed on the said sides (25) in order to close the said aperture (30,55) in a manner sealed against fluid.

10. Motor vehicle according to claim 9, **characterised in that** the said deformable means comprise at least one punched flat piece (31,54) of soft material.

11. Motor vehicle according to claim 10, **characterised in that** the said piece (31,54) is glued onto the corresponding said side (25).

12. Motor vehicle according to any one of the preceding claims, **characterised in that** it comprises a cross member (13,70), comprising an intermediate section (14) which extends through the said encasing structure (17;45); the said encasing structure (17;45) comprising guide surfaces (37,38) for the said flow of air, which surround the said intermediate section (14) at least partially.

13. Motor vehicle according to claim 12, **characterised in that** the said guide surfaces (37,38) co-operate with the said bumper (4), in order to surround the said intermediate section (14) completely.

14. Motor vehicle according to claim 12 or claim 13, **characterised in that** the said guide surfaces (37,38) comprise an upper surface (37) in the form of a convex curve facing upwards.

15. Motor vehicle according to claim 14, **characterised in that** the said guide surfaces (37,38) comprise a lower shaped surface (38) comprising a first end portion (39), which faces the said bumper (4), and is in the form of a convex curve facing downwards, and a second end portion (40), which converges with the said shaped upper surface (37), towards the said unit (12), and is in the form of a concave curve facing downwards.

16. Motor vehicle according to any one of claims 12 to 15, **characterised in that** it comprises an impact absorption element (41), which is interposed between the said unit (12) and the said guide surfaces (37,38).

17. Motor vehicle according to any one of claims 12 to 16, **characterised in that** the said guide surfaces (37,38) are produced integrally with the said cross member (70).

18. Motor vehicle according to claim 17, **characterised in that** the said guide surfaces (37,38) delimit the said intermediate section (14) directly.

19. Motor vehicle according to claim 17 or claim 18,
**characterised in that** the said cross member (70) is produced by means of hydroforming.

20. Motor vehicle according to claim 19, **characterised**
**in that** the said cross member has a transverse cross-section which is variable along its own length.

21. Motor vehicle according to any one of claims 12 to 20, **characterised in that** it comprises a block (75) of foam material, which is interposed between the said cross member (70) and the said bumper (4), and is delimited by further surfaces (77,78), which extend the said guide surfaces (37,38), without discontinuity.

22. Motor vehicle according to any one of the preceding claims, **characterised in that** the said encasing structure (17) comprises a lower wall (22), which is produced integrally with the said bumper (4).

23. Motor vehicle according to any one of the preceding claims, **characterised in that** the said bumper (4) supports at least one closure portion (20a), which is disposed adjacent to the said encasing structure (17;45), and is produced integrally with the remaining part of the bumper (4) itself.

## Patentansprüche

1. Kraftfahrzeug (1), das einen vorderen Motorraum (2), einen Stoßfänger (4), der den Motorraum (2) vom begrenzt, eine Karosserie (7; 60), die den Motorraum (2) wenigstens teilweise umschließt, eine Wärmetauschereinheit (12), die in dem Motorraum (2) selbst untergebracht ist, und eine Verkleidungsstruktur (17; 45) für die Einheit (12), die im Betrieb eine Außenluftströmung durch die Einheit (12) selbst führt, umfasst; wobei die Verkleidungsstruktur (17; 45) wenigstens eine Wand (21, 22, 28, 34, 36, 46, 48) umfasst, die durch die umschließende Karosserie (7; 60) und/oder den Stoßfänger (4) unterstützt ist; **dadurch gekennzeichnet, dass** die Verkleidungsstruktur (17; 45) zwei Seiten (25) aufweist, wovon jede wenigstens eine erste Seitenwand (28; 46) besitzt, die einteilig mit dem Stoßfänger (4) hergestellt ist.

2. Kraftfahrzeug nach Anspruch 1, **dadurch gekennzeichnet, dass** es einen Grill (10; 61) umfasst, der vor der Einheit (12) an einer Position in der Nähe des Stoßfängers (4) angeordnet ist; wobei die Verkleidungsstruktur (17; 45) wenigstens eine Wand (21, 34, 48) umfasst, die einteilig mit dem Grill (10; 61) hergestellt ist.

3. Kraftfahrzeug nach Anspruch 2, **dadurch gekennzeichnet, dass** der Grill (10; 61) von der umschließenden Karosserie (7; 60) getragen wird.

4. Kraftfahrzeug nach einem der vorhergehenden Ansprüche, **dadurch gekennzeichnet, dass** die umschließende Karosserie durch eine Motorhaube (7) definiert ist.

5. Kraftfahrzeug nach einem der Ansprüche 1 bis 3, **dadurch gekennzeichnet. dass** die umschließende Karosserie durch einen festen Körper (60) definiert ist, der den Motorraum (2) umgibt und in fluiddichter Weise mit den Seiten der Einheit (12) verbunden ist.

6. Kraftfahrzeug nach einem der vorhergehenden Ansprüche, **dadurch gekennzeichnet, dass** jede Seite zusätzlich wenigstens eine zweite Seitenwand (47) umfasst, die einteilig mit einem Abschnitt (49) der Einheit (12) hergestellt ist.

7. Kraftfahrzeug nach Anspruch 2 und Anspruch 6, **dadurch gekennzeichnet, dass** die Seiten (25) jeweils dritte Seitenwände (48) umfassen, um die Einheit (12) mit dem Grill (10) zu verbinden.

8. Kraftfahrzeug nach Anspruch 6 oder Anspruch 7, **dadurch gekennzeichnet, dass** jede Seite (25) Mittel (32) für eine Einrastverbindung zwischen den Seitenwänden umfasst, die eine relative Verlagerung der Seitenwände selbst zulassen können.

9. Kraftfahrzeug nach einem der vorhergehenden Ansprüche, **dadurch gekennzeichnet, dass** jede Seite (25) wenigstens eine Öffnung (30, 55) begrenzt; wobei den Seiten (25) verformbare Mittel (31, 54) überlagert sind, um die Öffnung (30, 55) in einer fluiddichten Weise zu verschließen.

10. Kraftfahrzeug nach Anspruch 9, **dadurch gekennzeichnet, dass** die verformbaren Mittel wenigstens ein gestanztes flaches Teil (31, 54) aus einem weichen Werkstoff umfassen.

11. Kraftfahrzeug nach Anspruch 10, **dadurch gekennzeichnet, dass** das Teil (31, 55) auf die entsprechende Seite (25) geklebt ist.

12. Kraftfahrzeug nach einem der vorhergehenden Ansprüche, **dadurch gekennzeichnet, dass** es ein Querträgerelement (13, 70) umfasst, das einen Zwischenabschnitt (14) aufweist, der sich durch die Verkleidungsstruktur (17; 45) erstreckt; wobei die Verkleidungsstruktur (17; 45) Führungsflächen (37, 38) für die Luftströmung aufweist, die den Zwischenabschnitt (14) wenigstens teilweise umgeben.

13. Kraftfahrzeug nach Anspruch 12, **dadurch gekennzeichnet, dass** die Führungsflächen (37, 38) mit dem Stoßfänger (4) zusammenwirken, um den Zwlschenabschnitt (14) vollständig zu umgeben.

14. Kraftfahrzeug nach Anspruch 12 oder Anspruch 13, **dadurch gekennzeichnet, dass** die Führungsflächen (37, 38) eine obere Fläche (37) in Form einer nach oben weisenden konvexen Krümmung umfassen.

15. Kraftfahrzeug nach Anspruch 14, **dadurch gekennzeichnet, dass** die Führungsflächen (37, 38) eine untere geformte Fläche (38) umfassen, die einen ersten Endabschnitt (39), der dem Stoßfänger (4) zugewandt ist und die Form einer nach unten weisenden konvexen Krümmung besitzt, und einen zweiten Endabschnitt (40), der mit der geformten oberen Fläche (37) zu der Einheit (12) konvergiert und die Form einer nach unten weisenden konkaven Krümmung besitzt, umfassen.

16. Kraftfahrzeug nach einem der Ansprüche 12 bis 15, **dadurch gekennzeichnet, dass** es ein Stoßabsorptionselement (41) umfasst, das zwischen die Einheit (12) und die Führungsflächen (37, 38) eingefügt ist.

17. Kraftfahrzeug nach einem der Ansprüche 12 bis 16, **dadurch gekennzeichnet, dass** die Führungsflächen (37, 38) einteilig mit dem Querträgerelement (70) hergestellt sind.

18. Kraftfahrzeug nach Anspruch 17, **dadurch gekennzeichnet, dass** die Führungsflächen (37, 38) den Zwischenabschnitt (14) direkt begrenzen.

19. Kraftfahrzeug nach Anspruch 17 oder Anspruch 18, **dadurch gekennzeichnet, dass** das Querträgerelement (70) durch Hydroformung hergestellt ist.

20. Kraftfahrzeug nach Anspruch 19, **dadurch gekennzeichnet, dass** das Querträgerelement einen transversalen Querschnitt besitzt, der sich auf seiner Länge ändert.

21. Kraftfahrzeug nach einem der Ansprüche 12 bis 20, **dadurch gekennzeichnet, dass** es einen Block (75) aus Schaumstoff umfasst, der zwischen das Querträgerelement (70) und den Stoßfänger (4) eingefügt ist und durch weitere Oberflächen (77, 78) begrenzt ist, die die Führungsflächen (37, 38) ohne Unterbrechung verlängern.

22. Kraftfahrzeug nach einem der vorhergehenden Ansprüche, **dadurch gekennzeichnet, dass** die Verkleidungsstruktur (17) eine untere Wand (22) umfasst, die einteilig mit dem Stoßfänger (4) hergestellt ist.

23. Kraftfahrzeug nach einem der vorhergehenden Ansprüche, **dadurch gekennzeichnet, dass** der Stoßfänger (4) wenigstens einen umschließenden Abschnitt (20a) unterstützt, der in der Nähe der Verkleidungsstruktur (17; 45) angeordnet und einteilig mit dem übrigen Teil des Stoßfängers (4) selbst hergestellt ist.

## Revendications

1. Véhicule à moteur (1) comportant un compartiment moteur avant (2), un pare-chocs (4) qui délimite ledit compartiment moteur (2) à l'avant, une carrosserie (7 ; 60) qui ferme ledit compartiment moteur (2) au moins partiellement, une unité d'échangeur de chaleur (12) qui est reçue dans le compartiment moteur (2) lui-même, et une structure d'encaissement (17 ; 45) destinée à ladite unité (12) pour, en utilisation, guider un écoulement d'air externe à travers l'unité (12) elle-même, ladite structure d'encaissement (17 ; 45) comportant au moins une paroi (21, 22, 26, 34, 36, 46,48), qui est supportée par un élément parmi ladite carrosserie de fermeture (7 ; 60) et ledit pare-chocs (4), **caractérisé en ce que** ladite structure d'encaissement (17 ; 45) comporte deux côtés (25), chacun comportant au moins une première paroi latérale (26 ; 46) qui est produite en un seul bloc avec ledit pare-chocs (4).

2. Véhicule à moteur selon la revendication 1, **caractérisé en ce qu'**il comporte une grille (10 ; 61) qui est disposée en avant de ladite unité (12), dans une position adjacente audit pare-chocs (4), ladite structure d'encaissement (17 ; 45) comportant au moins une paroi (21, 34, 48) qui est produite en un seul bloc avec ladite grille (10 ; 61).

3. Véhicule à moteur selon la revendication 1, **caractérisé en ce que** ladite grille (10 ; 61) est supportée par ladite carrosserie de fermeture (7 ; 60).

4. Véhicule à moteur selon l'une quelconque des revendications précédentes, **caractérisé en ce que** ladite carrosserie de fermeture est définie par un capot (7).

5. Véhicule à moteur selon l'une quelconque des revendications 1 à 3, **caractérisé en ce que** ladite carrosserie de fermeture est définie par une carrosserie fixe (60) pour agencement dudit compartiment moteur (2), qui est connecté d'une manière étanche aux fluides aux côtés de ladite unité (12).

6. Véhicule à moteur selon l'une quelconque des revendications précédentes, **caractérisé en ce que** chacun desdits côtés comporte de plus au moins une deuxième paroi latérale (47), qui est produite en un seul bloc avec une partie (49) de ladite unité (12).

7. Véhicule à moteur selon les revendications 2 et 6, **caractérisé en ce que** lesdits côtés (25) comportent des troisièmes parois latérales respectives (48) pour connexion de ladite unité (12) à ladite grille (10).

8. Véhicule à moteur selon la revendication 6 ou 7, **caractérisé en ce que** chacun desdits côtés (25) comporte des moyens (32) pour une connexion par encliquetage entre lesdites parois latérales, pouvant permettre un déplacement relatif des parois latérales elles-mêmes.

9. Véhicule à moteur selon l'une quelconque des revendications précédentes, **caractérisé en ce que** chacun desdits côtés (25) délimite au moins une ouverture (30; 55), des moyens déformables (31, 54) étant superposés sur lesdits côtés (25) pour fermer ladite ouverture (30, 55) d'une manière rendue étanche aux fluides.

10. Véhicule à moteur selon la revendication 9, **caractérisé en ce que** lesdits moyens déformables comportent au moins une pièce plate poinçonnée (31, 54) de matériau mou.

11. Véhicule à moteur selon la revendication 10, **caractérisé en ce que** ladite pièce (31, 54) est collée sur ledit côté correspondant (25).

12. Véhicule à moteur selon l'une quelconque des revendications précédentes, **caractérisé en ce qu'**il comporte un élément transversal (13, 70) comportant un tronçon intermédiaire (14) qui s'étend à travers ladite structure d'encaissement (17 ; 45), ladite structure d'encaissement (17 ; 45) comportant des surfaces de guidage (37, 38) pour ledit écoulement d'air, entourant ledit tronçon intermédiaire (14) au moins partiellement.

13. Véhicule à moteur selon la revendication 12, **caractérisé en ce que** lesdites surfaces de guidage (37, 38) coopèrent avec ledit pare-chocs (4), pour entourer complètement ledit tronçon intermédiaire (14).

14. Véhicule à moteur selon la revendication 12 ou 13, **caractérisé en ce que** lesdites surfaces de guidage (37, 38) comportent une surface supérieure (37) ayant la forme d'une courbe convexe dirigée vers le haut.

15. Véhicule à moteur selon la revendication 14, **caractérisé en ce que** lesdites surfaces de guidage (37, 38) comportent une surface mise en forme inférieure (38) comportant une première partie d'extrémité (39), qui est en vis-à-vis dudit pare-chocs (4), et qui a la forme d'une courbe convexe dirigée vers le bas, et une seconde partie d'extrémité (40), qui converge avec ladite surface supérieure mise en forme (37), vers ladite unité (12), et qui a la forme d'une courbe concave dirigée vers le bas.

16. Véhicule à moteur selon l'une quelconque des revendications 12 à 15, **caractérisé en ce qu'**il comporte un élément d'absorption d'impact (41), qui est interposé entre ladite unité (12) et lesdites surfaces de guidage (37,38).

17. Véhicule à moteur selon l'une quelconque des revendications 12 à 16, **caractérisé en ce que** lesdites surfaces de guidage (37, 38) sont fabriquées en un seul bloc avec ledit élément transversal (70).

18. Véhicule à moteur selon la revendication 17, **caractérisé en ce que** lesdites surfaces de guidage (37, 38) délimitent ledit tronçon intermédiaire (14) directement.

19. Véhicule à moteur selon la revendication 17 ou 18, **caractérisé en ce que** ledit élément transversal (70) est produit par l'intermédiaire d'une hydroformage.

20. Véhicule à moteur selon la revendication 19, **caractérisé en ce que** ledit élément transversal a une coupe transversale qui est variable le long de sa propre longueur.

21. Véhicule à moteur selon l'une quelconque des revendications 12 à 20, **caractérisé en ce qu'**il comporte un bloc (75) de matériau en mousse, qui est interposé entre ledit élément transversal (70) et ledit pare-chocs (4), et qui est délimité par des surfaces supplémentaires (77, 78) étendant lesdites surfaces de guidage (37, 38) sans discontinuité.

22. Véhicule à moteur selon l'une quelconque des revendications précédentes, **caractérisé en ce que** ladite structure d'encaissement (17) comporte une paroi inférieure (22), qui est produite en un seul bloc avec ledit pare-chocs (4).

23. Véhicule à moteur selon l'une quelconque des revendications précédentes, **caractérisé en ce que** ledit pare-chocs (4) supporte au moins une partie de fermeture (20a), qui est disposée adjacente à ladite structure d'encaissement (17, 45), et qui est produite en un seul bloc avec la partie restante du pare-chocs (4) lui-même.
